# EUROPÄISCHE PATENTSCHRIFT

(11) **EP 1 534 979 B1**
(45) Veröffentlichungstag und Bekanntmachung des Hinweises auf die Patenterteilung: **11.01.2006**
(21) Anmeldenummer: 03773615.4
(22) Anmeldetag: 30.08.2003
(51) Int. Cl.: F16H 63/30, F16H 3/54, F16H 63/34, F16D 27/118

(54) **ELEKTROMAGNETISCHE SCHALTEINRICHTUNG EINES ZWEISTUFIGEN PLANETENGETRIEBES**
ELECTROMAGNETIC SELECTION DEVICE FOR A TWO-STAGE PLANETARY GEAR SET
CIRCUIT ELECTROMAGNETIQUE APPARTENANT A UN ENGRENAGE PLANETAIRE A DEUX ETAGES

(30) Priorität: 05.09.2002 DE 10241006
(43) Veröffentlichungstag der Anmeldung: 01.06.2005
(73) Patentinhaber: ZF FRIEDRICHSHAFEN AG, 88038 Friedrichshafen (DE)
(72) Erfinder: ECKERT, Harald, 88074 Meckenbeuren (DE); AUER, Manfred, 78357 Zoznegg (DE)
(86) Internationale Anmeldenummer: PCT/EP2003/009648
(87) Internationale Veröffentlichungsnummer: WO 2004/023004

(56) Entgegenhaltungen:
- EP-A- 0 475 504
- AT-B- 134 156
- DE-A- 4 140 320
- DE-A- 19 917 673
- DE-B- 1 202 599
- FR-A- 590 050
- GB-A- 668 902
- US-A- 4 484 495
- US-A- 4 592 251

## Beschreibung

Die Erfindung betrifft eine elektromagnetische Schalteinrichtung eines zweistufigen Planetengetriebes nach dem Oberbegriff des Patentanspruches 1, bekannt durch die DE-A 199 17 673.

Die durch die DE-A 199 17 673 bekannte elektromagnetische Schalteinrichtung besteht aus einem außerhalb des Gehäuses des Planetengetriebes angeordneten Elektromagneten mit einem beweglichen Anker, dessen Bewegungen über einen Hebelmechanismus von außen durch das Getriebegehäuse auf eine im Getriebegehäuse angeordnete Schiebemuffe übertragen werden. Durch diese elektromagnetische, hebelmechanische Steuerung wird die Schiebemuffe in eine erste und in eine zweite Schaltstellung bewegt, in denen entweder für einen direkten Durchtrieb von Antrieb zum Abtrieb Hohlrad und Sonnenrad oder zur Erzielung einer Untersetzung das Hohlrad mit dem Getriebegehäuse gekoppelt werden. Die bekannte Einrichtung weist im Hinblick auf eine kompakte Bauweise und eine spielfreie Bewegungsübertragung noch Potenziale auf. Auch der für den Hebelmechanismus notwendige Gehäusedurchbruch und damit verbundene Abdichtungsprobleme sind nicht vorteilhaft.

Es ist Aufgabe der vorliegenden Erfindung, eine elektromagnetische Schalteinrichtung der eingangs genannten Art im Hinblick auf eine kompakte und geschlossene Bauweise und einen möglichst spielfreien Übertragungsmechanismus, insbesondere zwischen Elektromagnet und Schiebemuffe zu verbessern.

Die Lösung dieser Aufgabe ergibt sich aus den Merkmalen des Patentanspruches 1. Vorteilhaft hierbei ist, dass jeglicher Hebelmechanismus für die Bewegungsübertragung zwischen Elektromagnet und Schiebemuffe entfällt und damit die Teilezahl reduziert wird, da der Anker direkt - über ein Lager - auf der Schiebemuffe befestigt ist. Damit entfällt auch jedes mit einem Hebelmechanismus notwendigerweise verbundene Spiel. Da der Anker innerhalb des Getriebegehäuses angeordnet ist, entfällt ein Durchbruch und damit eine mögliche Leckagestelle in der Wand des Getriebegehäuses.

In vorteilhafter Ausgestaltung der Erfindung ist der Anker als ringförmiges Teil ausgebildet, d. h. er greift über seinen gesamten Umfang an der Schiebemuffe an - ein etwaiges Verkanten ist damit weitestgehend ausgeschlossen.

Nach einer vorteilhaften Weiterbildung der Erfindung weist der Anker Ankerschrägen auf, die mit Schrägen von Ankergegenstücken korrespondieren, d. d. der Anker bildet mit den Ankergegenstücken jeweils einen Schiebekonus. Durch die Ankerschrägen wird der Luftspalt zwischen Ankergegenstück und Anker über den Schaltweg minimiert. Dadurch wird der Vorteil einer gleichmäßigen elektromagnetischen Anzugskraft (konstanter Zugkraftverlauf über den gesamten Schaltweg) erreicht.

Nach einer weiteren vorteilhaften Ausgestaltung der Erfindung, ist die gesamte elektromagnetische Schalteinrichtung als vormontierte Baueinheit ausgebildet, die in das Getriebegehäuse eingesetzt und dort befestigt wird. Dies bringt sowohl Montage- bzw. Fertigungsvorteile als auch den Vorteil einer kompakten, geschlossenen Bauweise für das gesamte Planetengetriebe. Die Schiebemuffe ist durch die Baueinheit gekapselt und verursacht somit weniger Pantschverluste.

Nach einer weiteren vorteilhaften Ausgestaltung der Erfindung wird der vorgefertigten Baueinheit an deren Stirnseite eine Bremsscheibe mit einer inneren Koppelverzahnung beigelegt, die zusammen mit der Baueinheit in das Getriebegehäuse eingesetzt und dort befestigt wird. Damit sind Schiebemuffe und Bremsscheibe, deren Koppelverzahnung miteinander korrespondieren, bereits bei der Montage zentriert.

Ein Ausführungsbeispiel der Erfindung ist in der Zeichnung dargestellt und wird im Folgenden näher beschrieben.
Es zeigen:
- Fig. 1: einen Schnitt durch ein Planetengetriebe mit Schalteinrichtung,
- Fig. 2: eine Einzeldarstellung der elektromagnetischen Schalteinrichtung aus Fig. 1 und
- Fig. 3: eine perspektivische Darstellung der elektromagnetischen Schalteinrichtung als vormontierte Baueinheit.

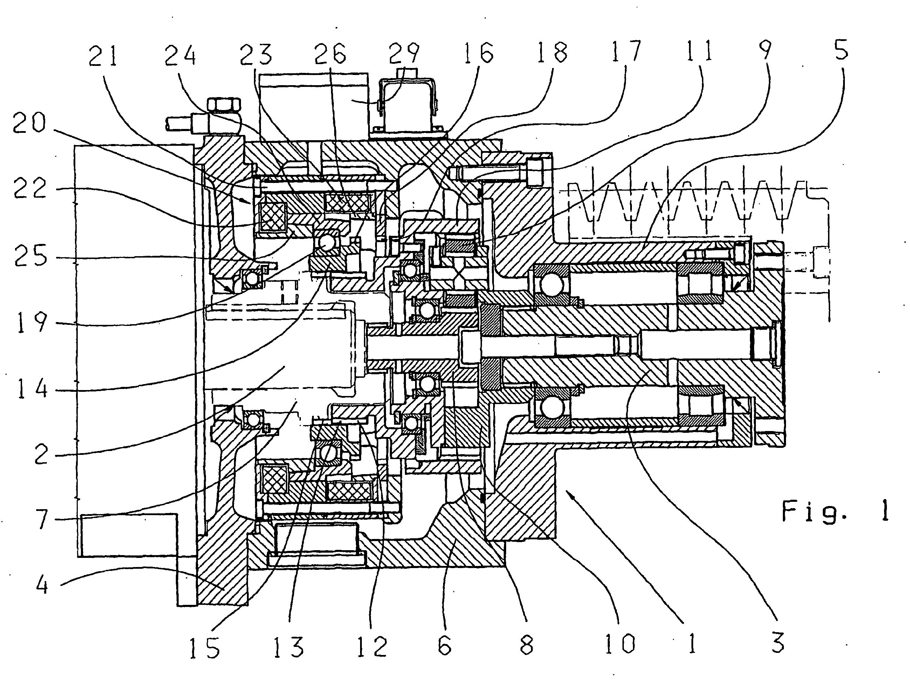

Fig. 1 zeigt ein zweistufiges Planetengetriebe 1 mit einer Antriebswelle 2 und einer Abtriebswelle 3, die jeweils in Gehäusedeckeln 4, 5 eines Getriebegehäuses 6 gelagert sind. Die Antriebswelle 2 ist über eine Mitnehmerhülse 7 formschlüssig mit einem Sonnenrad 8 verbunden, welches mit Planetenrädern 9 eines Planetenträgers 10 kämmt, der seinerseits formschlüssig mit der Abtriebswelle 3 verbunden ist. Die Planetenräder 9 kämmen mit einem Hohlrad 11, welches drehbar gegenüber dem Planetenträger 10 bzw. dem Sonnenrad 8 gelagert ist. Das Hohlrad 11 weist eine äußere Koppelverzahnung 12 auf, die mit einer inneren Koppelverzahnung 13 einer Schiebemuffe 14 in oder außer Eingriff gebracht werden kann. Die Schiebemuffe 14 kann ferner mit einer äußeren Koppelverzahnung 15 der Mitnehmerhülse 7 in oder außer Eingriff gebracht werden. Die Schiebemuffe 14 weist ferner eine äußere Koppelverzahnung 16 auf, die durch axiale Verschiebung der Schiebemuffe 14 in oder außer Eingriff mit einer inneren Koppelverzahnung 17 einer gehäusefesten Bremsscheibe 18 gebracht werden kann. Die Schiebemuffe 14 stützt sich über ein Rillenkugellager 19 gegenüber einer elektromagnetischen Schalteinheit 20 ab, die mittels Befestigungsbolzen 21 zusammen mit der Bremsscheibe 18 am Getriebegehäuse 6 koaxial zur Antriebswelle 2 befestigt ist.

Die Schalteinheit 20, die unten genauer beschrieben wird, steuert die axiale Bewegung der Schiebemuffe 14 in drei Stellungen, d. h. eine Neutralstellung und zwei Schaltstellungen. In der in der Zeichnung dargestellten ersten Schaltstellung koppelt die Schiebemuffe 14 das Hohlrad 11 und die Mitnehmerhülse 7; bei diesem "Direktgang" ist das Übersetzungsverhältnis 1 : 1. Um in die zweite Schaltstellung zu gelangen, wird die Schaltmuffe 14 durch die Schalteinheit 20 axial nach rechts verschoben, bis die äußere Koppelverzahnung 16 mit der inneren Koppelverzahnung 17 der Bremsscheibe 18 in Eingriff kommt. Dann ist das Hohlrad 11 über die Schaltmuffe 14 gegenüber dem Gehäuse 6 abgebremst bzw. fest gehalten. Die Drehzahl der Antriebswelle 2 wird dann ins Langsame untersetzt.
Die Schiebemuffe weist an ihrem Außenumfang nicht dargestellte Nuten auf, in welche Verriegelungsbolzen eingreifen, um die Schiebemuffe in einer der Schaltstellungen zu halten.
Die Verriegelungsbolzen sind von einer elektromechanischen Betätigungseinheit 29 radial zur Getriebehauptachse verschiebbar, wobei sie unter Federkraft in die Nuten einrasten und von einem Elektromagneten der Betätigungseinheit 29 radial nach außen gezogen werden, um die Schiebemuffe zu entriegeln. Die Elektromagnete der Schalteinheit und der Betätigungseinheit 29 müssen daher nur angesteuert, d. h. bestromt, werden, wenn eine Schaltung durchgeführt wird. Außerhalb von Schaltungen verhindert die Verriegelungseinheit eine unbeabsichtigte Verschiebung der Schiebemuffe.

Die Schalteinheit 20 weist zwei Magnetspulen 22 , 23 auf, zwischen denen ein als ringförmiges Teil ausgebildeter Anker 24 axial beweglich angeordnet ist. Dem Anker 24 sind ein linkes Ankergegenstück 25 und ein rechtes Ankergegenstück 26, jeweils im Bereich der linken Magnetspule 22 bzw. der rechten Magnetspule 23 zugeordnet. Der Anker 24 ist fest mit dem Außenring des Rillenkugellagers 24 verbunden, d. h. die Axialbewegung des Ankers 24 wird direkt auf die Schiebemuffe 14 übertragen. Der genaue Aufbau der Schalteinheit 20 wird im Folgenden beschrieben.

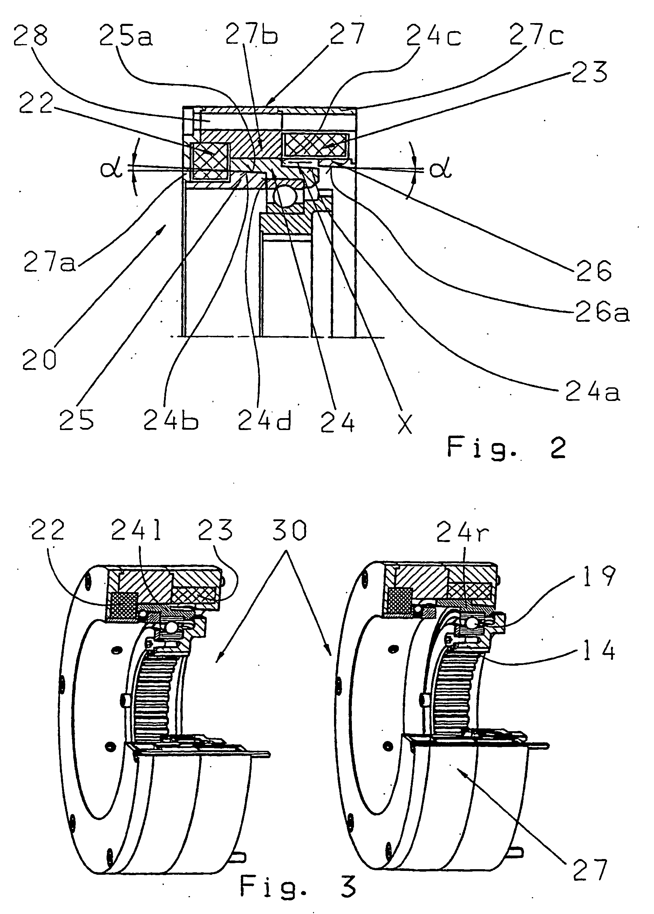

Fig. 2 zeigt die Schalteinheit 20 aus Fig. 1 in vergrößerter Darstellung, wobei die Bezugszahlen aus Fig. 1 übernommen werden. Die linke im Querschnitt etwa quadratisch ausgebildete Magnetspule 22 und die rechte im Querschnitt rechteckförmig ausgebildete Magnetspule 23 werden von einem Magnetkörper 27, bestehend aus drei gefügten Teilen 27a, 27b, 27c, aufgenommen und zusammengehalten. Dies geschieht über die in Fig. 1 dargestellten Befestigungsbolzen 21, welche durch eine durchgehende Bohrung 28 des Magnetkörpers 27 gesteckt werden. Am Magnetkörper 27 sind ebenfalls die beiden Ankergegenstücke 25 und 26 befestigt. Der ringförmig ausgebildete Anker 24 weist eine rechte äußere Ankerschräge 24a und eine linke innere Ankerschräge 24b auf, d. h. jeweils konische Ringflächen. Das rechte Ankergegenstück 26 weist eine entsprechende Schräge 26a auf und das linke Ankergegenstück 25 besitzt eine entsprechende Schräge 25a, d. h. ebenfalls konische Ringflächen. Der Winkel a dieser Ankerschräge bzw. des Konus beträgt etwa 3 Grad. Die Ankerschräge 24a wird in Richtung Ankermitte durch eine Stirnfläche 24c begrenzt, während die Ankerschräge 24b an einer inneren Stirnfläche 24d endet. Diese beiden senkrecht zur Drehachse verlaufenden Stirnflächen 24c, 24d dienen als Anschlag bei der Axialbewegung des Ankers 24. Der Schaltweg den der Anker 24 zwischen den beiden Schaltstellungen zurücklegt, ist mit x bezeichnet. Durch die Ankerschrägen 24a, 24b und die entsprechenden Schrägen 26a, 25a an den Ankergegenstücken 26, 25 wird der Luftspalt minimiert, dadurch ergibt sich ein etwa konstanter Verlauf der magnetischen Anziehungskraft auf den Anker 24.

Der Betrieb der Schalteinheit 20 erfolgt in der Weise, dass entweder die linke Magnetspule 22 zur Bewegung des Ankers 24 nach links oder die rechte Magnetspule 23 zur Bewegung des Ankers 24 nach rechts bestromt wird. Durch den zuvor erwähnten konstanten Zugkraftverlauf ergibt sich bei einem Umschalten sofort die volle magnetische Anzugskraft auf den Anker 24.

Fig. 3 zeigt eine perspektivische Darstellung der zuvor beschriebenen Schalteinheit 20 als komplette vormontierte Baueinheit 30 in zwei Darstellungen mit unterschiedlichen Schaltstellungen. Das linke Bild entspricht der Darstellung in Fig. 2, d. h. der Anker 241 befindet sich in seiner linken Position. Das rechte Bild dagegen zeigt den Anker 24r in seiner rechten Position. Die in Fig. 2 dargestellte Schalteinheit 20 ist durch das Lager 19 und die Schaltmuffe 14 komplettiert. Zusammen mit den Magnetspulen 22, 23, dem Anker 24 und dem Magnetkörper 27 ergeben diese Teile zusammen die kompakte Baueinheit 30, die als solche in das in Fig. 1 dargestellte Getriebe eingesetzt und dort befestigt wird. Man erkennt aus der Darstellung ohne weiteres, dass die Schiebemuffe 14 gekapselt ist und somit wenig Pantschverluste verursachen kann.

### Bezugszeichen

- 1: Planetengetriebe
- 2: Antriebswelle
- 3: Abtriebswelle
- 4: Gehäusedeckel
- 5: Gehäusedeckel
- 6: Getriebegehäuse
- 7: Mitnehmerhülse
- 8: Sonnenrad
- 9: Planetenrad
- 10: Planetenträger
- 11: Hohlrad
- 12: äußere Koppelverzahnung (Teil 11)
- 13: innere Koppelverzahnung (Teil 14)
- 14: Schiebemuffe
- 15: äußere Koppelverzahnung (Teil 7)
- 16: äußere Koppelverzahnung (Teil 14)
- 17: innere Koppelverzahnung (Teil 18)
- 18: Bremsscheibe
- 19: Rillenkugellager
- 20: Schalteinheit
- 21: Befestigungsbolzen
- 22: Magnetspule, links
- 23: Magnetspule, rechts
- 24: Anker
- 24a: Ankerschräge
- 24b: Ankerschräge
- 24c: Stirnfläche
- 24d: Stirnfläche
- 25: Ankergegenstück, links
- 25a: Schräge (Teil 25)
- 26: Ankergegenstück, rechts
- 26a: Schräge (Teil 26)
- 27: Magnetkörper
- 27a: Magnetkörper
- 27b: Magnetkörper
- 27c: Magnetkörper
- 28: Durchgangsbohrung
- 29: elektromagnetische Betätigungseinheit
- 30: vormontierte Baueinheit

## Patentansprüche

1. Zweistufiges Planetengetriebe (1) mit einer Antriebswelle (2) und einer Abtriebswelle (3), einem Sonnenrad (8), einem Hohlrad (11), einem Planetenträger (10) mit Planetenrädern (5), einem Getriebegehäuse (6) sowie einer elektromagnetischen Schalteinrichtung mit einer Schiebemuffe (14) zur Schaltung eines ersten Ganges, bei weichem das Hohlrad (11) mit dem Gehäuse (6) koppelbar, und eines zweiten Ganges, bei welchen das Hohlrad mit dem Sonnenrad koppelbar ist, wobei die Schiebmuffe mittels eines Elektromagneten, bestehend aus Magnetspulen (22, 23) und einem Anker (24), verschiebbar ist, **dadurch gekennzeichnet, dass** der Anker (24) drehbar, jedoch axial fixiert auf der Schiebemuffe (14) angeordnet ist.

2. Planetengetriebe nach Anspruch 1, **dadurch gekennzeichnet, dass** der Anker (24) als ringförmiges Teil ausgebildet und mittels eines Lagers (19) auf der Schiebemuffe (14) befestigt ist.

3. Planetengetriebe nach Anspruch 1 oder 2, **dadurch gekennzeichnet, dass** die Magnetspulen (22, 23) innerhalb des Getriebegehäuses (6) angeordnet sind.

4. Planetengetriebe nach Anspruch 2 oder 3, **dadurch gekennzeichnet, dass** der Anker (24) eine äußere und, axial versetzt, eine innere Ankerschräge (24a, 24b) aufweist, denen ein äußeres und ein inneres Ankergegenstück (26, 25) zugeordnet sind, wobei Ankerschräge und Ankergegenstück jeweils einen Schiebekonus bilden.

5. Planetengetriebe nach Anspruch 4, **dadurch gekennzeichnet, dass** der Winkel α der Ankerschräge bzw. des Konus ca. 3 Grad beträgt.

6. Planetengetriebe nach Anspruch 4 oder 5, **dadurch gekennzeichnet, dass** die Ankerschrägen (24a, 24b) durch ringförmige Stirnflächen (24c, 24d) begrenzt sind, die als Anschlagflächen für die Endstellungen des Ankers (24) wirken.

7. Planetengetriebe nach Anspruch 2, 3 und 4 oder 5 oder 6, **dadurch ge-kennzeichnet**, **dass** die Magnetspulen (22, 23), der Anker (24) mit Lager (19) und Schiebemuffe (14), die Ankergegenstücke (25, 26) in einem Magnetkörper (27) aufgenommen sind, der als vormontierte Baueinheit (30) ausgebildet und in das Getriebegehäuse (6) einsetzbar ist.

8. Planetengetriebe nach Anspruch 7, **dadurch gekennzeichnet, dass** an einer Stirnseite (27c) der Baueinheit (30) eine mit einer inneren Koppelverzahnung (17) versehene Bremsscheibe (18) angeordnet ist, die zusammen mit der Baueinheit (30) im Getriebegehäuse (6) befestigt ist.

9. Planetengetriebe nach einem der vorhergehenden Ansprüche, **dadurch gekennzeichnet, dass** die Schalteinrichtung eine elektromagnetisch betätigbare Verriegelungseinheit mit einer Betätigungseinheit (29) und Verriegelungsbolzen aufweist, welche in Nuten der Schiebemuffe (14) einrasten und die Schiebemuffe in einer Schaltstellung halten.

## Claims

1. The invention relates to a two-stage planetary transmission (1) with a drive shaft (2) and an output shaft (3), a sun gear (8), a ring gear (11), a planet carrier (10) with planet gears (5), a transmission housing (6) as well as an electromagnetic shifting device with a sliding sleeve (14) for the shifting of a fist gear, in which the ring gear (11) can be linked to the housing (6), and for the shifting of a second gear, in which the ring gear can be linked to the sun gear; with the sliding sleeve being movable by means of a solenoid composed of solenoid coils (22, 23) and an armature (24), **characterized in that** the armature (24) is arranged on the sliding sleeve (14) in a manner that it can rotate while it is axially fixed.

2. Planetary transmission according to claim 1, **characterized in that** the armature (24) is designed as a ring-shaped component and is mounted on the sliding sleeve (14) by means of a bearing (19).

3. Planetary transmission according to claim 1 or 2, **characterized in that** the solenoid coils (22, 23) are arranged within the transmission housing (6).

4. Planetary transmission according to claim 2 or 3, **characterized in that** the armature (24) features an outer and - axially displaced - an internal armature chamfer (24a, 24b), with outer and inner armature counterparts (26, 25) being assigned to them, and with armature chamfers and armature counterparts forming sliding cones.

5. Planetary transmission according to claim 4, **characterized in that** the angle α of the armature chamfer or the cone amounts to about 3 degrees.

6. Planetary transmission according to claim 4 or 5, **characterized in that** the armature chamfers (24a, 24b) are limited by ring-shaped end faces (24c, 24d), which act as stop faces for the end positions of the armature (24).

7. Planetary transmission according to claim 2, 3 and 4 or 5 or 6, **characterized in that** the solenoid coils (22, 23), the armature (24) with bearing (19) and sliding sleeve (14), and the armature counterparts (25, 26) are contained in a magnetic shell (27), which is designed as a preassembled component (30) and can be placed in the transmission housing (6).

8. Planetary transmission according to claim 7, **characterized in that** one face end (27c) of the component (30) has a brake disk (18) featuring an internal coupling gearing (17) arranged on it, which together with the component (30) is mounted in the transmission housing (6).

9. Planetary transmission according to one of the preceding claims, **characterized in that** the shifting device features an electromagnetically controllable locking device with an actuating device (29) and locking bolts, which engage with grooves of the sliding sleeve (14) and hold the sliding sleeve in a shift position.

## Revendications

1. Boîte de vitesses épicycloïdale à deux étages (1) dotée d'un arbre d'entrée (1) et d'un arbre de sortie (3), d'une roue planétaire (8), d'une couronne (11), d'un arbre porte-satellites (10) avec satellites (5), d'un carter de boîte (6) et d'un dispositif de commande électromagnétique doté d'un manchon coulissant (14) pour l'engagement d'un premier rapport, sur lequel la couronne (11) peut être fixée au carter (6) et pour l'engagement d'un deuxième rapport, sur lequel la couronne peut être reliée à la roue planétaire, et sachant que le manchon coulissant peut être déplacé au moyen d'un électroaimant, composé de solénoïdes (22, 23) et d'un induit (24), **caractérisée en ce que** l'induit (24) est disposé sur le manchon coulissant (14) de façon orientable, mais étant toutefois fixé axialement.

2. Boîte de vitesses épicycloïdale selon la revendication 1, **caractérisée en ce que** l'induit (24) est réalisé en forme annulaire et **en ce qu'**il est fixé sur le manchon coulissant (14) au moyen d'un palier (19).

3. Boite de vitesses épicycloïdale selon la revendication 1 ou 2, **caractérisée en ce que** les solénoïdes (22, 23) sont disposés dans le carter de la boîte de vitesses (6).

4. Boîte de vitesses épicycloïdale selon la revendication 2 ou 3, **caractérisée en ce que** l'induit (24) comporte un chanfrein interne (24a, 24b) auquel sont associées une contre-partie extérieure et une contre-partie intérieure de l'induit (26, 25), sachant que le chanfrein et la contre-partie de l'induit forment respectivement un cône coulissant.

5. Boîte de vitesses épicycloïdale selon la revendication 4, **caractérisée en ce que** l'angle a du chanfrein de l'induit ou du cône est d'environ 3 degrés.

6. Boîte de vitesses épicycloïdale selon la revendication 4 ou 5, **caractérisée en ce que** les chanfreins de l'induit (24a, 24b) sont limités par des faces frontales (24c, 24d), celles-ci agissant en tant que surfaces de butée pour les positions de fin de course de l'induit (24).

7. Boîte de vitesses épicycloïdale selon la revendication 2, 3 et 4 ou 5 ou 6, **caractérisée en ce que** les solénoïdes (22, 23), l'induit (24) avec palier (19) et le manchon coulissant (14) et les contreparties de l'induit (25, 26) sont logés dans un corps aimanté (27), qui est conçu en tant que sous-ensemble préassemblé (30) et qui peut être monté dans le carter de la boite de vitesses (6).

8. Boîte de vitesses épicycloïdale selon la revendication 7, **caractérisée en ce que** sur une face frontale (27c) de l'unité (30) est disposé un disque de frein (18) doté d'une denture d'accouplement (17), celle-ci étant fixé avec l'unité (30) dans le carter de la boîte de vitesses (6).

9. Boîte de vitesses épicycloïdale selon une des revendications précédentes, **caractérisée en ce que** le dispositif de commande comporte une unité de verrouillage actionnable par voie électromagnétique dotée d'une unité d'actionnement (29) et d'un axe de verrouillage, ceux-ci engrenant dans des rainures du manchon coulissant (14) et maintenant le manchon coulissant dans une position de commande.
